# EUROPÄISCHE PATENTSCHRIFT

(11) **EP 1 046 536 B1**
(45) Veröffentlichungstag und Bekanntmachung des Hinweises auf die Patenterteilung: **17.08.2005**
(21) Anmeldenummer: 00105625.8
(22) Anmeldetag: 16.03.2000
(51) Int. Cl.: B60N 2/16, B60N 2/08, B60N 2/235, B60N 2/44

(54) **Einsteller für einen Fahrzeugsitz**
Adjusting device for vehicle seats
Dispositif de règlage pour sièges de véhicules

(30) Priorität: 24.04.1999 DE 19918718
(43) Veröffentlichungstag der Anmeldung: 25.10.2000
(73) Patentinhaber: KEIPER GmbH & Co. KG, 67657 Kaiserslautern (DE)
(72) Erfinder: Hänsel, Richard, 55237 Flonheim (DE); Nock, Eckhard, 67551 Worms (DE); Bauer, Timo, 55629 Schwarzerden (DE)
(74) Vertreter: Patentanwälte Hosenthien-Held und Dr. Held

(56) Entgegenhaltungen:
- EP-A- 0 419 336
- GB-A- 2 156 901
- US-A- 5 718 482

## Beschreibung

Die Erfindung betrifft einen Einsteller für einen Fahrzeugsitz, insbesondere für einen Kraftfahrzeugsitz, mit den Merkmalen des Oberbegriffs des Anspruches 1.

Ein Einsteller, der als Lineareinsteller für einen Kraftfahrzeugsitz eingesetzt wird, weist eine Zahnstange als Zahnelement und ein langgezogenes Gehäuse als Lagerungselement auf, welche bei entriegeltem Einsteller relativ zueinander in Längsrichtung verschiebbar sind, wodurch sich die Gesamtlänge des Einstellers ändert. In dem Gehäuse ist eine Klinke oder Schwinge auf einem Bolzen schwenkbar gelagert, welche mit ihren Zähnen in die Verzahnung der Zahnstange einfallen kann, so daß der Einsteller verriegelt wird. Die Klinke wird durch einen Nocken oder eine Exzenterscheibe in dieser verriegelten Stellung gehalten. Nachteilig bei diesem Einsteller ist, daß die Einstellung der Gesamtlänge des Einstellers nur in bestimmten Stufen erfolgen kann, die durch die Zahnteilung der Zahnstange vorgegeben sind, und daß der Einsteller nicht verriegelt werden kann, wenn beim Einfallen der Klinke Zahn auf Zahn zu liegen kommt.

Aus der GB 2 156 901 A ist ein Einsteller der eingangs genannten Art bekannt, welcher als Lehneneinsteller eingesetzt wird. Die an einem Beschlagunterteil schwimmend gelagerte, mit einer Verzahnung versehene Klinke wirkt mit einem Zahnbogen an einem Beschlagoberteil zusammen. Die schwimmende Lagerung sorgt für eine Bewegungsmöglichkeit entlang des Zahnbogens, so daß ein stufenloses Verriegeln möglich ist. Im verriegelten Zustand beaufschlagen zwei Exzenterelemente die Klinke auf der von ihrer Verzahnung abgewandten Seite und halten sie in Eingriff mit dem Zahnbogen des Beschlagoberteils.

Der Erfindung liegt die Aufgabe zu Grunde, einen Einsteller der eingangs genannten Art zu verbessern. Diese Aufgabe wird erfindungsgemäß durch einen Einsteller für einen Fahrzeugsitz mit den Merkmalen des Anspruches 1 gelöst. Vorteilhafte Ausgestaltungen sind Gegenstand der Unteransprüche. Ein Fahrzeugsitz mit einem solchen Einsteller ist Gegenstand des Anspruches 10.

Mit der schwimmenden Lagerung kann die Klinke nicht nur in ihrer Schwenkrichtung relativ zum Lagerungselement geschwenkt werden, sondern auch noch in einer weiteren Richtung relativ zum Lagerungselement bewegt werden. Damit kann die Klinke eine translatorische (oder in Umfangsrichtung verlaufende) Bewegung ausführen und wenigstens ein kleines Stück weit am Zahnelement entlang geschoben werden, so daß beim Einfallen eine Positionierung von Zahn auf Zahn vermieden oder aufgehoben werden kann. Die schwimmende Lagerung wird durch das Exzenterelement gesteuert, welches auf der Klinke gelagert ist und den Bolzen umschließt. Dadurch wird der translatorische Anteil der Bewegung der Klinke in eine Drehbewegung umwandelt, die dann einfacher unterbrochen werden kann, beispielsweise mittels eines Sperrelementes.

Das Exzenterelement ist vorzugsweise einteilig oder zweiteilig ausgebildet, wobei ein einteiliges Exzenterelement kostengünstiger herzustellen ist und ein zweiteiliges Exzenterelement im verriegelten Zustand das Lager der Klinke umgreifen und spielfrei stellen kann. Das Sperrelement sperrt das Exzenterelement vorzugsweise mittels einer Verzahnung, die feiner ist als eine Verzahnung zwischen dem Zahnelement und der Klinke. Dadurch kann eine Verriegelung erreicht werden, die geringere Stufen aufweist, bei einer sehr feinen Verzahnung sogar nahezu stufenlos ist.

In einer bevorzugten Ausführungsform ist die Klinke mittels eines Steuerstücks wenigstens teilweise entlang des Zahnelementes bewegbar. Eine Positionierung von Zahn auf Zahn beim Einfallen wird dann automatisch während des Verriegelungsvorgangs aufgelöst. Der zuerst einfallende Zahn der Klinke, d.h. der Zahn mit dem kürzesten Abstand zum Lagerungselement, kann etwas kürzer als die anderen Zähne ausgebildet sein, so daß er bei seinem schrägen Auftreffen zwischen zwei Zähne des Zahnelementes einsteuert.

Der erfindungsgemäße Einsteller kann sowohl als Lineareinsteller, beispielsweise als Längs- oder als Höheneinsteller, ausgebildet sein als auch rotatorisch aufgebaut sein, beispielsweise als Rastbeschlag, wobei dieser Einsteller insbesondere bei einem Kraftfahrzeugsitz Verwendung findet. Bei einer Ausbildung als Längseinsteller können das Zahnelement und das Gehäuse zur Lagerung der Klinke jeweils in eine Schiene integriert sein, wobei dann die Schienen ineinander geschoben sind.

Im folgenden ist die Erfindung anhand zweier in der Zeichnung dargestellten Ausführungsbeispiele näher erläutert. Es zeigen
- Fig. 1: eine Seitenansicht eines ersten erfindungsgemäßen Einstellers,
- Fig. 2: eine Draufsicht auf den Einsteller in Richtung des Pfeiles II in Fig. 1,
- Fig. 3: einen Querschnitt durch den Einsteller entlang der Linie III-III in Fig. 1,
- Fig. 4: einen Querschnitt durch den Einsteller entlang der Linie IV-IV in Fig. 1,
- Fig. 5: einen Längsschnitt durch den Einsteller entlang der Linie V-V in Fig. 2,
- Fig. 6: einen Längsschnitt durch den Einsteller entlang der Linie VI-VI in Fig. 2,
- Fig. 7: eine schematische Darstellung des Einstellers vor dem Verriegeln,
- Fig. 8: eine schematische Darstellung eines Fahrzeugsitzes mit einem erfindungsgemäßen Einsteller als Lineareinsteller mit angedeuteter Polsterung und angedeutetem Rastbeschlag,
- Fig. 9: eine schematische Darstellung eines als Längseinsteller in einem Fahrzeugsitz verwendeten erfindungsgemäßen Einstellers,
- Fig. 10: eine teilweise geschnitten dargestellte Seitenansicht eines Rastbeschlags als zweiten erfindungsgemäßen Einsteller im verriegelten Zustand,
- Fig. 11: eine teilweise geschnitten dargestellte Seitenansicht eines Rastbeschlags als zweiten erfindungsgemäßen Einsteller im entriegelten Zustand.

Das erste Ausführungsbeispiel betrifft einen als Lineareinsteller ausgebildeten Einsteller 1. Der Einsteller 1 umfaßt eine Gehäuseplatte 3 und einen Gehäusedeckel 5, die als plattenförmige Teile mit jeweils einem Kopfabschnitt und einem daran anschließenden, länglichen, schmäleren und sich verjüngenden Schenkelabschnitt nahezu gleich ausgebildet und durch Bolzen sowohl beabstandet als auch verbunden sind, beispielsweise indem die Bolzen über einen Teil ihrer Länge Gewinde aufweisen. Die Gehäuseplatte 3 dient in ihrem Kopfabschnitt als Lagerungselement.

Eine als Zahnelement dienende Zahnstange 7 mit einer groben Verzahnung aus keilförmigen Zähnen auf einer Längsseite ist zwischen Gehäuseplatte 3 und Gehäusedeckel 5, auf der von den Schenkelabschnitten abgewandten Seite, in Richtung auf die Schenkelabschnitte zu eingeführt. Auf der dem Gehäusedeckel 5 zugewandten Seite weist die Zahnstange 7 eine an ihr angebrachte und an ihr entlang laufende Leiste 8 auf, welche zur Vergrößerung der Breite vorgesehen ist. Die Zahnstange 7 liegt mit ihrer von der Verzahnung abgewandten Seite an zwei Gleitbolzen 9 an, die zugleich die Gehäuseplatte 3 und den Gehäusedeckel 5 miteinander verbinden. Auf der die Verzahnung tragenden Seite liegt die Zahnstange 7 an einem an der Gehäuseplatte 3 vorgesehenen Gleitstück 11 an. Die Zahnstange 7 wird durch die Gleitbolzen 9 und das Gleitstück 11 so geführt, daß sie in ihrer Längsrichtung relativ zur Gehäuseplatte 3 beweglich ist und ansonsten nur ein geringes Spiel aufweist.

Auf einem Klinkenbolzen 13, der ebenfalls die Gehäuseplatte 3 und den Gehäusedeckel 5 verbindet, ist eine Klinke 15 schwimmend gelagert, d.h. die Klinke 15 umschließt den Klinkenbolzen 13 mittels eines Langloches 17, welches sich ungefähr in Längsrichtung der Zahnstange 7 erstreckt. Die lange Seite der Klinke 15 ist zur Zahnstange 7 hin gewandt. Durch eine Schwenkbewegung bewegt sich die Klinke 15 auf die Zahnstange 7 zu und kann mittels einiger an der Klinke 15 vorgesehener Zähne mit der Zahnstange 7 in Eingriff kommen. Die Länge des Langloches 17 ist etwas größer als der Abstand zweier Zähne der Zahnstange 7.

Die Bewegung der Klinke 15 innerhalb des Langloches 17, also die schwimmende Lagerung, wird durch eine zweiteilige Exzenterscheibe 19 als Exzenterelement gesteuert. Die einen näherungsweise kreisförmigen Querschnitt aufweisende Exzenterscheibe 19 ist auf der dem Gehäusedeckel 5 zugewandten Seite der Klinke 15 angeordnet. Der Klinkenbolzen 13 liegt zwischen einem ersten Exzenterscheibenteil 19' und einem zweiten Exzenterscheibenteil 19'', auf der Trennungslinie zwischen den beiden Exzenterscheibenteilen 19' und 19'' und außerhalb der Mitte der Exzenterscheibe 19. Die beiden Exzenterscheibenteile 19' und 19'' sind beide ungefähr halbkreisförmig und weisen auf der einander zugewandten Seite eine Aufnahme für den Klinkenbolzen 13 auf Der erste Exzenterscheibenteil 19' weist zusätzlich eine kleine Aufnahme für einen Vorsprung des zweiten Exzenterscheibenteils 19'' auf. Die Exzenterscheibe 19 ist zwischen zwei konkaven Lagerstücken 21 gelagert, die beide von der Klinke 15 abstehen. Die beiden Lagerstücke 21 halten die beiden Exzenterscheibenteile 19' und 19'' zusammen, gestatten aber ein großes Spiel. Bewegt sich die Klinke 15 innerhalb des Langloches 17, dreht sich aufgrund der Exzentrizität die Exzenterscheibe 19. Schwenkt die Klinke 15 um den Klinkenbolzen 13, so wird aufgrund der Reibung die Exzenterscheibe 19 mitgenommen.

Auf der dem Klinkenbolzen 13 abgewandten Seite weisen die beiden Exzenterscheibenteile 19' und 19'' auf der Umfangsfläche eine Verzahnung 23 auf, die feiner ist als die Zahnteilung der Zahnstange 7. Die Exzenterscheibe 19 trägt ihre Verzahnung 23 auf der der Zahnstange 7 abgewandten Seite und bewegt sie zwischen den beiden Lagerstücken 21. Ein Sperrhebel 25 ist auf einem parallel zum Klinkenbolzen 13 angeordneten Sperrhebelbolzen 27 drehbar gelagert. An einem Arm weist der Sperrhebel 25 einige Zähne auf, mit denen er, nach einer Drehbewegung auf die Exzenterscheibe 19 zu, mit deren Verzahnung 23 in Eingriff gelangen und die zenterscheibe 19 blockieren kann. Eine Schenkelfeder 29, die um den Sperrhebelbolzen 27 herum angeordnet ist, drückt an einem Ende gegen die Klinke 15, also in Richtung der Zahnstange 7, und ist am anderen Ende am Sperrhebel 25 eingehakt, so daß sie diesen von der Exzenterscheibe 19 wegdrückt.

Auf einem Spannstückbolzen 31, welcher wie die Gleitbolzen 9 und der Klinkenbolzen 13 die Gehäuseplatte 3 vom Gehäusedeckel 5 beabstandet und zugleich mit diesem verbindet, ist in der Ebene der Klinke 15 ein Spannstück 33, in der Ebene der Exzenterscheibe 19 und des Sperrhebels 25 ein Steuerstück 35 und zwischen dem Spannstück 33 und dem Steuerstück 35 ein Entriegelungshebel 37 drehbar gelagert. Ein das Steuerstück 35 und das Spannstück 33 gemeinsam durchdringender Steuerbolzen 39, der parallel zum Spannstückbolzen 31 angeordnet ist, ist im Bereich seiner Endabschnitte sowohl in der Gehäuseplatte 3 als auch im Gehäusedekkel 5 jeweils in einer Kulisse 41 geführt. Die bogenförmigen Kulissen 41 sind viertelskreisförmig um den Spannstückbolzen 31 herum ausgebildet, und zwar ungefähr von der Verbindungslinie zum Klinkenbolzen 13 bis zur Verbindungslinie zum nächstgelegenen Punkt der Zahnstange 7. An den über die Gehäuseplatte 3 und den Gehäusedeckel 5 überstehenden Endabschnitten des Steuerbolzens 39 sind jeweils Schraubenknickfedern 43 mit einem Ende angebracht, die mit ihren anderen Enden an der Gehäuseplatte 3 bzw. dem Gehäusedeckel 5 jeweils an von der Außenseite abstehenden Zapfen 45 angebracht sind.

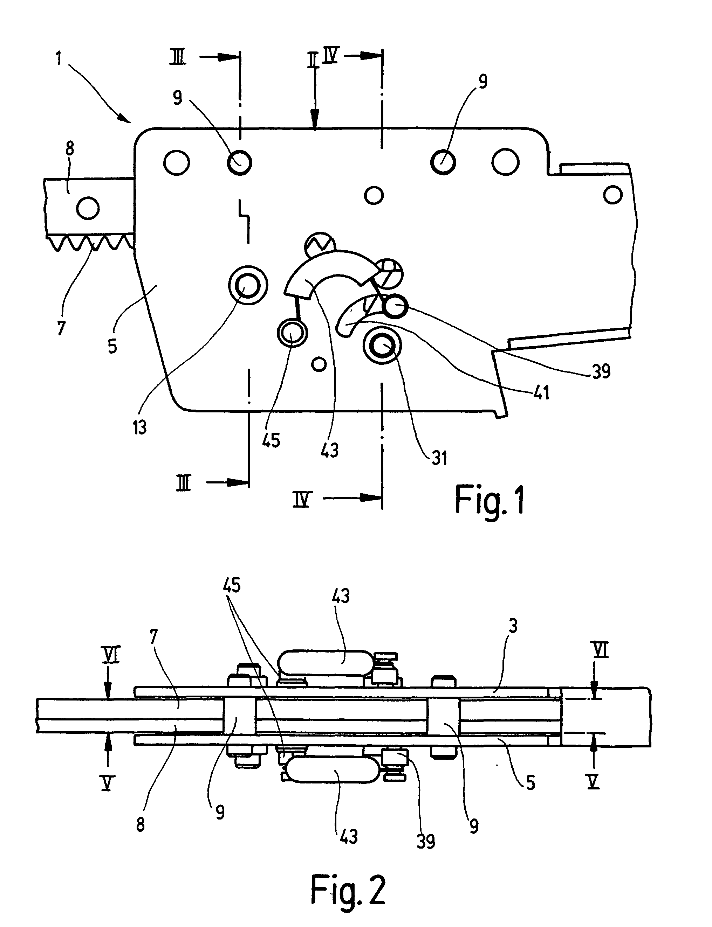

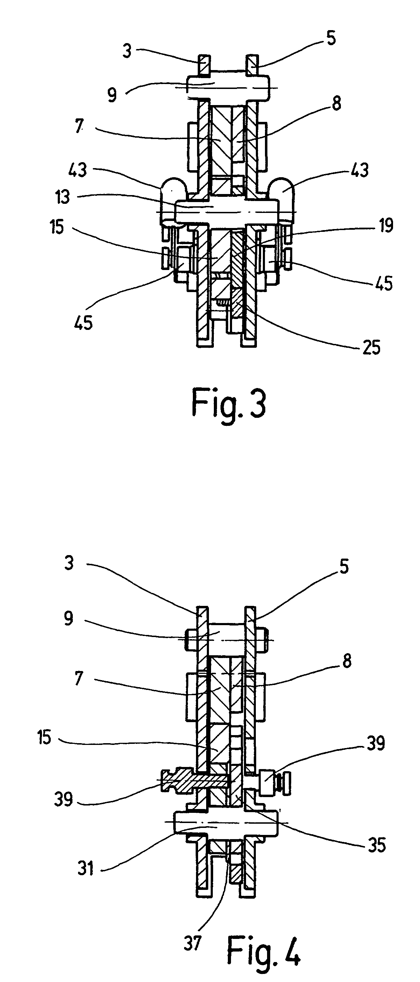

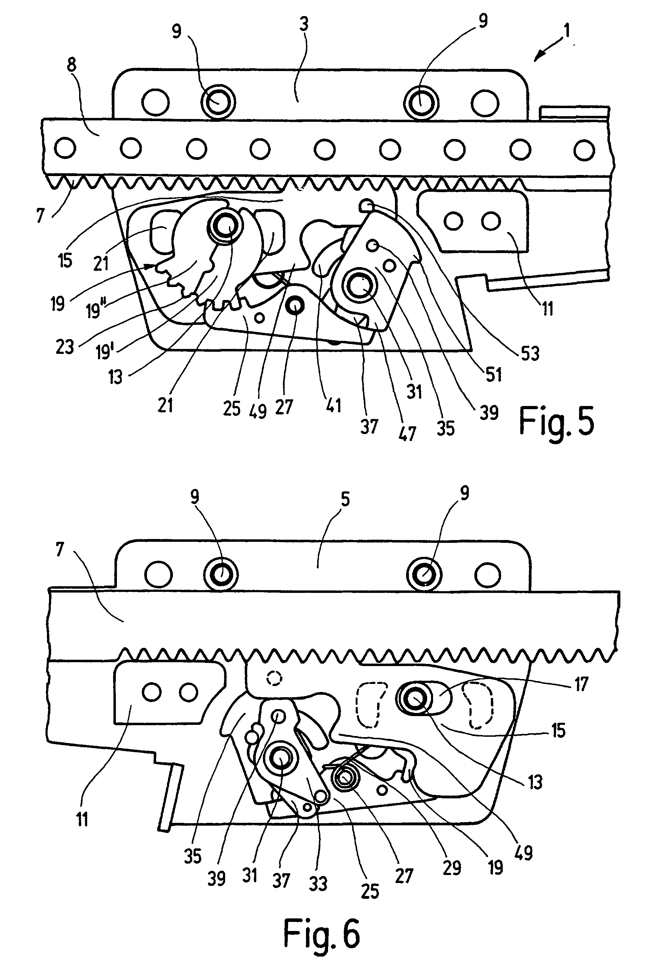

Wenn der Einsteller 1 verriegelt ist, wie in den Fig. 1 bis 6 dargestellt, so drücken die Schraubenknickfedern 43 den Steuerbolzen 39 an das näher zur Zahnstange 7 gelegene Ende der Kulisse 41, so daß das Spannstück 33 auf die Klinke 15 drückt, die wiederum gegen die Zahnstange 7 drückt und diese formschlüssig und aufgrund der Keilform der Zähne ohne Spiel hält. Das Steuerstück 35 weist an dem vom Steuerbolzen 39 abgewandten Ende einen Sperrnocken 47 auf, mit dem das Steuerstück 35 gegen den von der Exzenterscheibe 19 abgewandten Arm des Sperrhebels 25 drückt. Der Sperrhebel 25 wird daher entgegen der Kraft der Schenkelfeder 29 gegen die Exzenterscheibe 19 gedrückt und greift in deren Verzahnung 23 ein. Zugleich drückt die Schenkelfeder 29 auch die Klinke 15 gegen die Zahnstange 7. Die Exzenterscheibenteile 19' und 19" legen sich durch die Belastung unter weitgehender Aufhebung des Spiels an den Lagerstücke 21 so an, daß sie den Klinkenbolzen 13 klemmen und so die Position der Klinke 15 mit dem Langloch 17 relativ zum Klinkenbolzen 13 fixieren. Die Klinke 15 kann dann nicht relativ zum Klinkenbolzen 13 verschoben werden, ist also in allen Richtungen spielfrei.

Zum Entriegeln des Einstellers 1 wird über einen Bowdenzug am Entriegelungshebel 37 gezogen, der beim Schwenken das Spannstück 33 und das Steuerstück 35 mitnimmt. Der Steuerbolzen 39 bewegt sich daher entgegen der Kraft der Schraubenknickfedern 43 in Richtung des anderen Endes der Kulissen 41. Der Sperrnokken 47 verläßt den Sperrhebel 25, so daß die Schenkelfeder 29 den Sperrhebel 25 von der Exzenterscheibe 19 wegschwenken kann. Zugleich gibt das Spannstück 33 die Klinke 15 frei. Die schwimmend gelagerte Klinke 15 kann dadurch wieder bewegen. Kurz bevor der Steuerbolzen 39 ans Ende der Kulissen 41 gelangt, gelangt das Spannstück 33 noch an einen Vorsprung 49 der Klinke 15, den das Spannstück 33 mitnimmt, wodurch das Spannstück 33 die Klinke 15 einerseits von der Zahnstange 7 wegschwenkt und andererseits etwas von sich wegdrückt, so daß der Klinkenbolzen 13 nicht an dem vom Spannstück 33 abgewandten Ende des Langlochs 17 anliegt. Die Zahnstange 7 ist nun wieder in ihrer Längsrichtung frei beweglich.

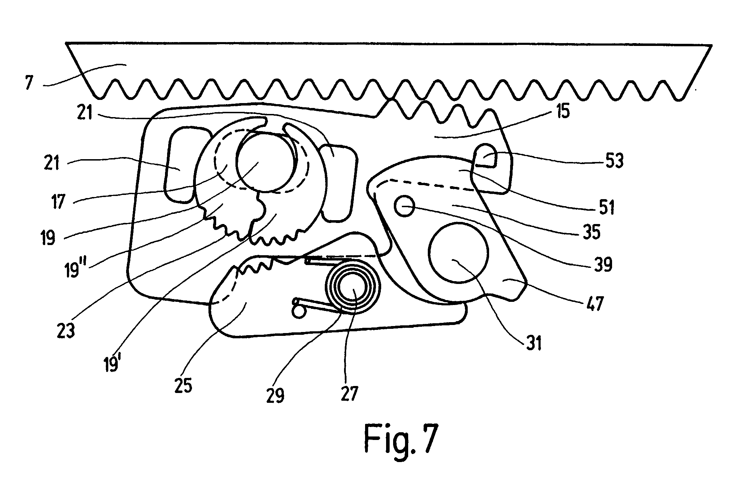

Zum Verriegeln des Einstellers 1 wird der Entriegelungshebel 37 losgelassen, wodurch die Schraubenknickfedern 43 den Steuerbolzen 39 in Richtung des anderen Endes der Kulissen 41 drücken. Der Steuerbolzen 39 nimmt das Steuerstück 35 und das Spannstück 33 mit. Das Spannstück 33 beginnt die Klinke 15 in Richtung der Zahnstange 7 zu drücken. Am Steuerstück 35 ist an dem zur Klinke 15 hinschwenkenden Eck eine Nase 51 ausgebildet. Diese Nase 51 gelangt in den Bereich eines von der Klinke 15 abstehenden, in der Ebene der Exzenterscheibe 19 ausgebildeten, einzelnen Absatzes 53. Sollte die Klinke 15 so in Anlage an die Zahnstange 7 kommen, daß Zahn auf Zahn zu liegen kommt, wie in Fig. 7 dargestellt, so berührt die Nase 51 des Steuerstücks 35 den Absatz 53 und nimmt ihn und damit die Klinke 15 mit. Die Klinke 15 wird dadurch etwas in Längsrichtung der Zahnstange 7 verschoben, so daß nicht mehr Zahn auf Zahn steht und die Klinke 15 anschnäbeln kann. Gleichzeitig verschiebt sich das Langloch 17 relativ zum Klinkenbolzen 13. Durch die Verschiebung über den Vorsprung 49 beim Entriegeln ist sichergestellt, daß der Klinkenbolzen 13 sich nicht an dem vom Absatz 53 abgewandten Ende des Langlochs 17 befindet. Die Klinke 15 kann nun in die Zahnstange 7 einfallen, gegebenenfalls nach einer Längsbewegung relativ zur Zahnstange 7, wobei diese Relativbewegung in der Größenordnung des Zahnabstandes ist und durch die schwimmende Lagerung über das Langloch 17 ausgeglichen wird. Die Exzenterscheibe 19 paßt sich unter Aufhebung oder zumindest Minimalisierung ihres Spieles an. Am Ende der Schwenkbewegung des Steuerstücks 35 gelangt dessen Sperrnocken 47 an den Sperrhebel 25 und schwenkt diesen so, daß er in die Verzahnung 23 der Exzenterscheibe 19 einfällt und diese blockiert. Damit ist der vorstehend beschriebene verriegelte Zustand wieder erreicht.

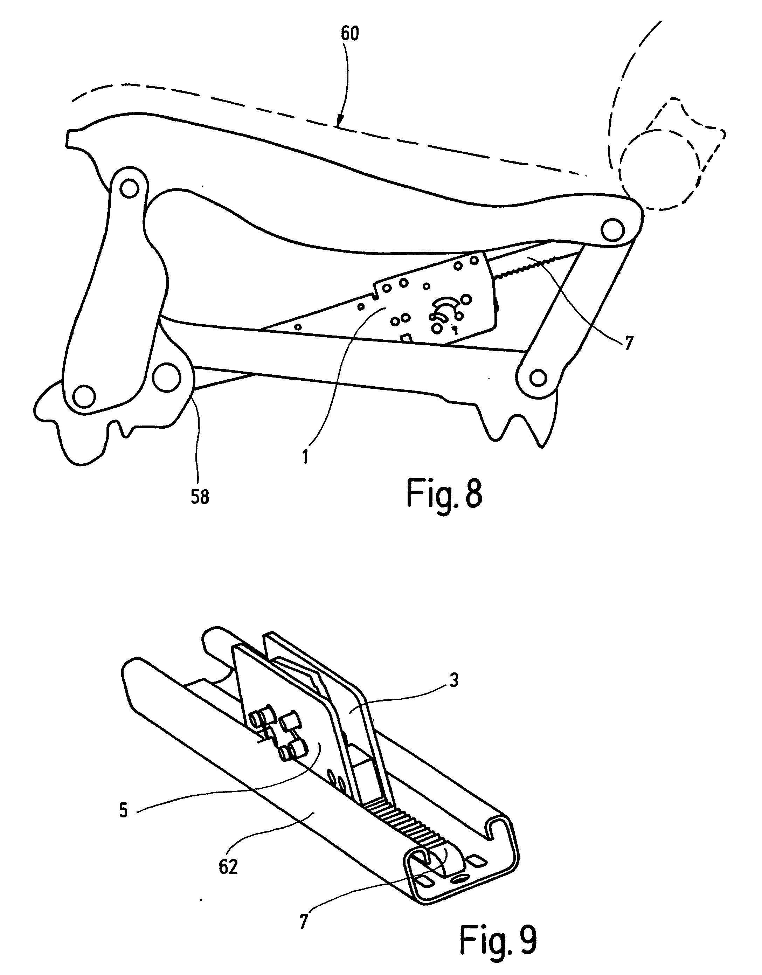

Der beschriebene Einsteller 1 wird beispielsweise, wie in Fig. 8 dargestellt, als Lineareinsteller in einer Sitzstruktur 58 eines in eine aufrechte Nichtgebrauchs- oder Packagestellung klappbaren Fahrzeugsitzes 60 für ein Kraftfahrzeug verwendet. Der gleiche Einsteller 1 kann auch als Längseinsteller verwendet werden, wie in Fig. 9 dargestellt, wo die Zahnstange 7 mit einer fahrzeugstrukturfesten Unterschiene 62 verbunden ist, während die Gehäuseplatte 3, der Gehäusedeckel 5 und alle Bauteile dazwischen an einer sitzstrukturfesten Oberschiene angebracht sind.

Das zweite Ausführungsbeispiel betrifft einen Rastbeschlag 101. Soweit dessen Bauteile die gleiche Funktion wie Bauteile im ersten Ausführungsbeispiel haben, sind sie im folgenden mit um 100 höheren Bezugszeichen versehen. Der Rastbeschlag 101 weist ein Beschlagunterteil 103 als Lagerungselement und ein relativ zu diesem um eine Mittelachse 104 drehbar gelagertes Beschlagoberteil 106 auf. Die Mittelachse 104 ist als zylindrischer Bolzen mit einem herausgearbeiteten Innenprofil ausgebildet. Konzentrisch zur Mittelachse 104 trägt das Beschlagoberteil 106 einen ein Zahnelement bildenden, ringförmigen Zahnkranz 107, der mit seiner Verzahnung radial nach innen weist.

Vom Beschlagunterteil 103 steht innerhalb des Zahnkranzes 107 ein Klinkenbolzen 113 parallel zur Mittelachse 104 ab. Auf dem Klinkenbolzen 113 ist eine Klinke 115 mit einem näherungsweise in Umfangsrichtung weisenden Langloch 117 schwimmend gelagert. Die Klinke 115 kann daher sowohl um den Klinkenbolzen 113 in radialer Richtung auf den Zahnkranz 107 zu und von ihm wegschwenken als auch in Umfangsrichtung relativ zum Zahnkranz 107 verschoben werden. Die Länge des Langlochs 117 ist etwas größer als die Zahnteilung des Zahnkranzes 107. Die Klinke 115 trägt auf der dem Zahnkranz 107 zugewandten Seite einige Zähne, mit denen sie in die Verzahnung des Zahnkranzes 107 eingreifen kann.

Um den Klinkenbolzen 113 herum ist auf der dem Beschlagunterteil 103 abgewandten Seite der Klinke 115 eine Exzenterscheibe 119 angeordnet, die zwischen zwei von der Klinke 115 abstehenden Lagerstücken 121 mit Spiel drehbar gelagert ist. Die Exzenterscheibe 119 ist mit der Exzenterscheibe 19 des ersten Ausführungsbeispiels übereinstimmend ausgebildet, insbesondere für den Spielausgleich zweiteilig ausgeführt. Die entsprechende Verzahnung 123 auf der den Aufnahmen für den Klinkenbolzen 113 gegenüberliegenden Seite der Exzenterscheibe 119 zeigt ungefähr in Richtung der Mittelachse 104. Diese Verzahnung 123 ist feiner als die Verzahnungen des Zahnkranzes 107 und der Klinke 115.

Ein länglicher Sperrschieber 125 umschließt mit einem in seiner Längsrichtung verlaufenden zweiten Langloch 126 die Mittelachse 104. Durch eine vom Beschlagunterteil 103 abstehende Führung 130 mit einem eckigen, ungefähr U-förmigem Profil ist der Sperrschieber 125 in der Ebene der Exzenterscheibe 119 so geführt, daß er in radialer Richtung auf den Klinkenbolzen 113 ausgerichtet ist und auf diesen zu und von diesem weg beweglich ist. Der Sperrschieber 125 trägt an dem Ende, das auf den Klinkenbolzen 113 ausgerichtet ist, einige Zähne, mit denen er mit der Exzenterscheibe 119 in Eingriff kommen kann.

Zwischen dem Sperrschieber 125 und dem Beschlagunterteil 103 ist in der Ebene der Klinke 115 ein Steuerstück 135 drehbar auf der Mittelachse 104 gelagert. Das Steuerstück 135 weist eine ungefähr dreiarmige Grundform auf. An dem von der Klinke 115 abgewandten ersten Arm ist ein Steuerbolzen 139 befestigt, der durch eine Kulisse 141 im Sperrschieber 125 greift und diesen dadurch bewegen kann. Die Kulisse 141 verläuft leicht schräg zur Umfangsrichtung und weist ein radial weiter außen gelegenes und ein radial weiter innen gelegenes Ende auf.

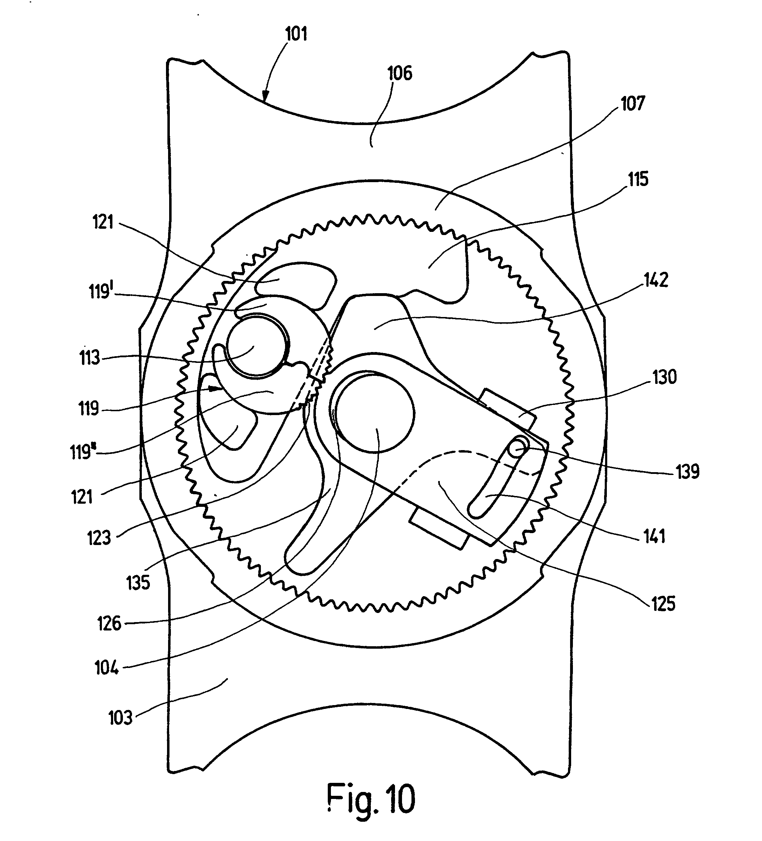

Im verriegelten Zustand des Rastbeschlags 101 gemäß Fig. 10 ist das Steuerstück 135 so gedreht, daß es mit einem zweiten, als Spannarm 142 ausgebildeten Arm gegen die Klinke 115 drückt und diese mit dem Zahnkranz 107 in Eingriff hält. Der Steuerbolzen 139 befindet sich an dem radial weiter außen gelegenen Ende der Kulisse 141. Der Sperrschieber 125 ist gegen die Exzenterscheibe 119 gedrückt, greift mit seinen Zähnen in die Verzahnung 123 der Exzenterscheibe 119 ein und blockiert diese. Die Exzenterscheibe 119 hält die Position des Langlochs 117 relativ zum Klinkenbolzen 113 fest.

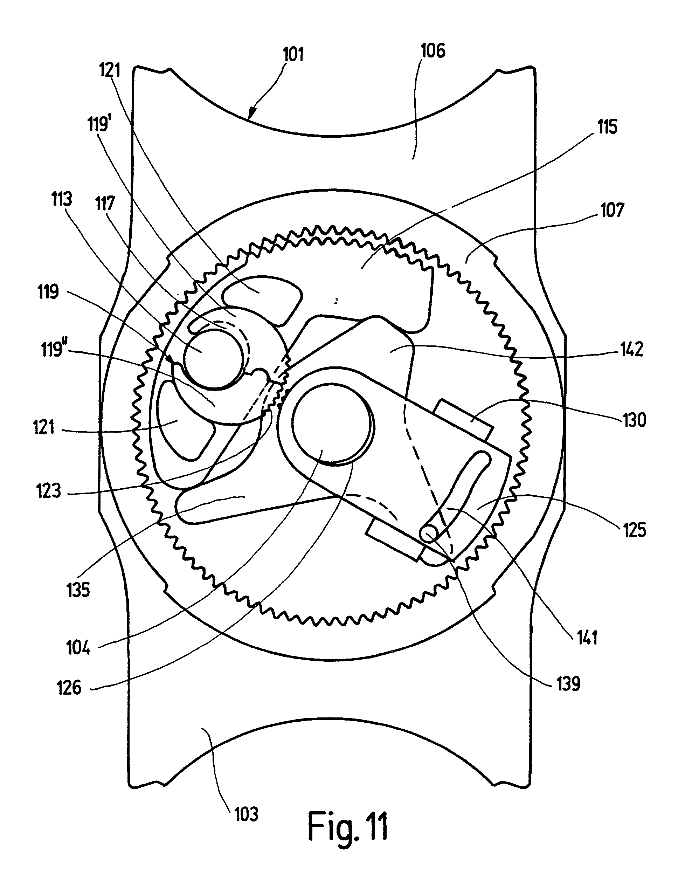

Zum Entriegeln wird das Steuerstück 135 durch Angreifen am dritten Arm etwas gedreht (in der Zeichnung im Uhrzeigersinn), so daß sich der Steuerbolzen 139 innerhalb der Kulisse 141 zum radial weiter innen liegenden Ende bewegt. Der Sperrschieber 125 bewegt sich dadurch radial nach außen und gibt die Exzenterscheibe 119 frei. Der Spannarm 142 gibt nun die Klinke 115 frei, so daß diese bei frei beweglicher Exzenterscheibe 119 zurückschwenken und sich vom Zahnkranz 107 lösen kann. Die Klinke 115 bildet zugleich den Anschlag für den dritten Arm des Steuerstücks 135. Das Beschlagoberteil 106 kann nunmehr aus der in Fig. 11 dargestellten Stellung heraus relativ zum Beschlagunterteil 103 verdreht werden.

Zum Verriegeln des Rastbeschlags 101 wird das Steuerstück 135 durch Angreifen am dritten Arm verdreht (in der Zeichnung gegen den Uhrzeigersinn) und mit dem Spannarm 142 in Anlage an die Klinke 115 gebracht. Die Klinke 115 schwenkt dadurch in Richtung auf den Zahnkranz 107 zu. Sobald die Klinke 115 am Zahnkranz 107 anschnäbelt, wird eine Versetzung der Verzahnungen durch die schwimmende Lagerung der Klinke 115 ausgeglichen, d.h. die Klinke 115 bewegt ihr Langloch 117 relativ zum Klinkenbolzen 113. Der Spannarm 142 kann dadurch die Klinke 115 tiefer in den Zahnkranz 107 drücken. Gleichzeitig legt sich die Exzenterscheibe 119 unter Aufhebung oder Minimalisierung ihres Spiels an die Lagerstücke 121 an. Der Steuerbolzen 139 nähert sich wieder dem radial weiter außen liegenden Ende der Kulisse 141 und schiebt dadurch den Sperrschieber 125 radial nach innen auf die Exzenterscheibe 119 zu. Im Endzustand greift der Sperrschieber 125 mit seinen Zähnen in die Verzahnung 123 der Exzenterscheibe 119 ein und blockiert diese. Gleichzeitig verspannt der Spannarm 142 die Klinke 115 im Zahnkranz 107.

Der Rastbeschlag 101 kann wie der Einsteller 1 des ersten Ausführungsbeispiels in einem Fahrzeugsitz für ein Kraftfahrzeug, entsprechend dem in Fig. 8 dargestellten, verwendet werden.

### Bezugszeichenliste

- 1: Einsteller
- 3: Lagerungselement / Gehäuseplatte
- 5: Gehäusedeckel
- 7: Zahnelement / Zahnstange
- 8: Leiste
- 9: Gleitbolzen
- 11: Gleitstück
- 13: Klinkenbolzen
- 15: Klinke
- 17: Langloch
- 19: Exzenterscheibe
- 19': erster Exzenterscheibenteil
- 19": zweiter Exzenterscheibenteil
- 21: Lagerstücke
- 23: Verzahnung
- 25: Sperrhebel
- 27: Sperrhebelbolzen
- 29: Schenkelfeder
- 31: Spannstückbolzen
- 33: Spannstück
- 35: Steuerstück
- 37: Entriegelungshebel
- 39: Steuerbolzen
- 41: Kulissen
- 43: Schraubenknickfeder
- 45: Zapfen
- 47: Sperrnocken
- 49: Vorsprung
- 51: Nase
- 53: Absatz
- 58: Sitzstruktur
- 60: Fahrzeugsitz
- 62: Unterschiene
- 101: Rastbeschlag
- 103: Lagerungselement / Beschlagunterteil
- 104: Mittelachse
- 106: Beschlagoberteil
- 107: Zahnelement / Zahnkranz
- 113: Klinkenbolzen
- 115: Klinke
- 117: Langloch
- 119: Exzenterscheibe
- 121: Lagerstücke
- 123: Verzahnung
- 125: Sperrschieber
- 126: zweites Langloch
- 130: Führung
- 135: Steuerstück
- 139: Steuerbolzen
- 141: Kulisse
- 142: Spannarm

## Patentansprüche

1. Einsteller für einen Fahrzeugsitz, insbesondere für einen Kraftfahrzeugsitz, bei dem in einem entriegelten Zustand des Einstellers (1; 101) ein Zahnelement (7; 107) und ein Lagerungselement (3; 103) relativ zueinander beweglich sind, mit einer Klinke (15; 115), welche in einem verriegelten Zustand des Einstellers (1; 101) mit dem Zahnelement (7; 107) zusammenwirkt und welche am Lagerungselement (3; 103) schwimmend gelagert ist, indem die Klinke (15; 115) mittels eines Langloches (17; 117) einen vom Lagerungselement (3; 103) abstehenden Bolzen (13; 113) umschließt, und mit einem Exzenterelement (19; 119), **dadurch gekennzeichnet, daß** das Exzenterelement (19; 119) an der Klinke (15; 115) drehbar gelagert ist, den Bolzen (13; 113) aufnimmt und die schwimmende Lagerung der Klinke (15; 115) steuert.

2. Einsteller nach Anspruch 1, **dadurch gekennzeichnet, daß** das Exzenterelement einteilig ausgebildet ist.

3. Einsteller nach Anspruch 1, **dadurch gekennzeichnet, daß** das Exzenterelement (19; 119) zweiteilig ausgebildet ist.

4. Einsteller nach einem der Ansprüche 1 bis 3, **dadurch gekennzeichnet, daß** ein Sperrelement zum Sperren des Exzenterelementes (19; 119) vorgesehen ist.

5. Einsteller nach Anspruch 4, **dadurch gekennzeichnet, daß** das Sperrelement das Exzenterelement (19; 119) mittels einer Verzahnung (23; 123) sperrt, die feiner ist als eine Verzahnung zwischen dem Zahnelement (7; 107) und der Klinke (15; 115).

6. Einsteller nach Anspruch 5, **dadurch gekennzeichnet, daß** der zuerst in das Zahnelement (7; 107) einfallende Zahn der Klinke (15; 115) etwas kürzer ist als die anderen Zähne der Klinke (15; 115).

7. Einsteller nach einem der Ansprüche 1 bis 6, **dadurch gekennzeichnet, daß** die Klinke (15; 115) mittels eines Steuerstücks (35; 135) wenigstens teilweise entlang des Zahnelementes (7; 107) bewegbar ist.

8. Einsteller nach einem der Ansprüche 1 bis 7, **dadurch gekennzeichnet, daß** der Einsteller (1) als Lineareinsteller ausgebildet ist.

9. Einsteller nach einem der Ansprüche 1 bis 7, **dadurch gekennzeichnet, daß** der Einsteller (101) als Rastbeschlag ausgebildet ist.

10. Fahrzeugsitz, insbesondere Kraftfahrzeugsitz, mit einer einstellbaren Sitzkomponente und wenigstens einem Einsteller (1;101) nach einem der Ansprüche 1 bis 9.

## Claims

1. Adjustment device for a vehicle seat, in particular for a motor vehicle seat, in which a toothed element (7; 107) and a bearing element (3; 103) can be moved relative to each other when the adjustment device (1; 101) is in an unlocked state, and which has a detent (15; 115) which co-operates with the toothed element (7; 107) when the adjustment device (1; 101) is in a locked state and which is arranged in a floating manner on the bearing element (3; 103) by the detent (15; 115) surrounding a pin (13; 113) which protrudes from the bearing element (3; 103) by means of an elongate hole (17; 117), and which has a cam element (19, 119), **characterised in that** the cam element (19; 119) is rotatably arranged on the detent (15; 115), receives the pin (13; 113) and controls the floating arrangement of the detent (15; 115).

2. Adjustment device according to claim 1, **characterised in that** the cam element is constructed in one piece.

3. Adjustment device according to claim 1, **characterised in that** the cam element (19; 119) is constructed in two pieces.

4. Adjustment device according to any one of claims 1 to 3, **characterised in that** a locking element is provided for locking the cam element (19; 119).

5. Adjustment device according to claim 4, **characterised in that** the locking element locks the cam element (19; 119) by means of a tooth arrangement (23; 123) which is finer than a tooth arrangement between the toothed element (7; 107) and the detent (15; 115).

6. Adjustment device according to claim 5, **characterised in that** the tooth of the detent (15; 115) that first engages in the toothed element (7; 107) is slightly shorter than the other teeth of the detent (15; 115).

7. Adjustment device according to any one of claims 1 to 6, **characterised in that** the detent (15; 115) can be moved at least partially along the toothed element (7; 107) by means of a control piece (35; 135).

8. Adjustment device according to any one of claims 1 to 7, **characterised in that** the adjustment device (1) is constructed as a linear adjustment device.

9. Adjustment device according to any one of claims 1 to 7, **characterised in that** the adjustment device (101) is constructed as a locking fitting.

10. Vehicle seat, in particular a motor vehicle seat, having an adjustable seat component and at least one adjustment device (1; 101) according to any one of claims 1 to 9.

## Revendications

1. Dispositif de réglage pour un siège de véhicule, en particulier pour un siège de véhicule automobile, dans lequel dans un état déverrouillé du dispositif de réglage (1 ; 101), un élément denté (7 ; 107) et un élément de palier (3 ; 103) sont déplaçables l'un par rapport à l'autre, avec un cliquet (15 ; 115), lequel dans un état verrouillé du dispositif de réglage (1 ; 101) coopère avec l'élément denté (7 ; 107) et qui est monté flottant sur l'élément de palier (3 ; 103), dans lequel le cliquet (15 ; 115) entoure au moyen d'un trou oblong (17 ; 117) un axe (13 ; 113) faisant saillie de l'élément de palier (3 ; 103), et avec un élément à excentrique (19 ; 119), **caractérisé par le fait que** l'élément à excentrique (19 ; 119) est monté à rotation sur le cliquet (15 ; 115), reçoit l'axe (13 ; 113) et commande le palier flottant du cliquet (15 ; 115).

2. Dispositif de réglage selon la revendication 1, **caractérisé par le fait que** l'élément à excentrique est réalisé en une seule pièce.

3. Dispositif de réglage selon la revendication 1, **caractérisé par le fait que** l'élément à excentrique (19 ; 119) est réalisé en deux pièces.

4. Dispositif de réglage selon l'une des revendications 1 à 3, **caractérisé par le fait qu'**un élément de blocage est prévu pour le blocage de l'élément à excentrique (19 ; 119).

5. Dispositif de réglage selon la revendication 4, **caractérisé par le fait que** l'élément de blocage bloque l'élément à excentrique (19 ; 119) au moyen d'un engrenage (23 ; 123) lequel est plus fin qu'un engrenage entre l'élément denté (7 ; 107) et le cliquet (15 ; 115).

6. Dispositif de réglage selon la revendication 5, **caractérisé par le fait que** la dent du cliquet (15 ; 115) tombant en premier dans l'élément denté (7 ; 107) est quelque peu plus courte que les autres dents du cliquet (15 ; 115).

7. Dispositif de réglage selon l'une des revendications 1 à 6, **caractérisé par le fait que** le cliquet (15 ; 115) est déplaçable au moyen d'une pièce de commande (35 ; 135) au moins partiellement le long de l'élément denté (7 ; 107).

8. Dispositif de réglage selon l'une des revendications 1 à 7, **caractérisé par le fait que** le dispositif de réglage (1) est réalisé sous la forme d'un dispositif de réglage linéaire.

9. Dispositif de réglage selon l'une des revendications 1 à 7, **caractérisé par le fait que** le dispositif de réglage (101) est réalisé sous la forme d'une ferrure d'arrêt.

10. Siège de véhicule, en particulier siège de véhicule automobile, avec un composant de siège réglable et au moins un dispositif de réglage (1 ; 101) tel que défini à l'une des revendications 1 à 9.
